# EUROPEAN PATENT APPLICATION

(11) **EP 3 399 733 A1**
(43) Date of publication of application: **07.11.2018**
(21) Application number: 17168973.0
(22) Date of filing: 02.05.2017
(51) Int. Cl.: H04N 1/00, G06F 3/0486, G06F 3/0481

(54) **A SYSTEM AND A METHOD FOR DRAGGING AND DROPPING A DIGITAL OBJECT ONTO A DIGITAL RECEPTIVE MODULE ON A PIXEL DISPLAY SCREEN**

(71) Applicant: OCE Holding B.V., 5914 CA Venlo (NL)
(72) Inventor: VAN DUN, Josephus A.M., 5914 CA Venlo (NL); HAGENS, Pascal A.M.S., 5914 CA Venlo (NL)
(74) Representative: OCE IP Department

(57) **Abstract**

The invention relates to an electronic system and a method for dragging and dropping a digital object on a pixel display screen of the electronic system for storing and controlling the digital object and a plurality of digital receptive modules, each digital receptive module being configured to receive or not to receive the digital object. The method comprising the steps of displaying a digital object pixel representation of the digital object on the display screen, displaying a digital receptive module pixel representation for each one of the plurality of digital receptive modules on the display screen, dragging the digital object pixel representation towards a first digital receptive module pixel representation of a first digital receptive module of the plurality of digital receptive modules, which first digital receptive module is configured not to receive the digital object, and upon dragging the digital object pixel representation and before the digital object pixel representation reaches any pixel of the first digital receptive module pixel representation on the pixel display screen, changing at least one of the visual appearance characteristics of the first digital receptive module pixel representation on the pixel display screen causing a visual appearance of the first digital receptive module pixel representation on the pixel display screen that indicates that the first digital receptive module is configured not to receive the digital object.

## Description

The invention relates to a computer-implemented method for dragging and dropping a digital object pixel representation of a digital object on a pixel display screen of an electronic system for storing and controlling the digital object and a plurality of digital receptive modules, each digital receptive module being configured to receive or not to receive the digital object, the method comprising the steps of
a) displaying a digital object pixel representation of the digital object on the display screen,
b) displaying a digital receptive module pixel representation for each one of the plurality of digital receptive modules on the display screen, and
c) dragging the digital object pixel representation towards a first digital receptive module pixel representation of a first digital receptive module of the plurality of digital receptive modules, which first digital receptive module is configured not to receive the digital object.

Pixel display screens are known which display a pixel representation which represents a digital object such as an image, a document or a print job, or display a pixel representation of a digital receptive module such as a pane or window, a list representation such as a print job queue representation. Such a digital object or digital receptive module is stored in a memory of the electronic system and may be selected by user input means like a mouse, a human finger, a stylus etc. The pixel display screen according to the present invention acts as a user interface to allow dragging and dropping of a pixel representation of the digital object on the pixel display screen by means of a mouse action, a touch action or a gesture action.

The digital object or the digital receptive module is represented by a number of connected pixels on the display screen having a border of pixels, also called hereinafter a digital receptive module pixel representation.

For convenience reasons, a representation of a digital object on the pixel display screen or a representation of a digital receptive module on the pixel display screen will hereinafter also be called "digital object" as such or "digital receptive module" as such respectively.

A digital receptive module is defined as a digital module which is configured to receive the digital object. There are also digital receptive modules which are configured to not receive the digital object. A configuration of a digital receptive module whether or not to receive a digital object strongly depends on the nature or context of the digital receptive module in relation to the nature or context of the digital object. For example, a print job queue module has a completely different nature than a calibration module. A digital receptive module may be a same module as another digital receptive module, but may have a different context. For example, a print queue module for a first printer has a different context than a print queue module for a second printer which is not compatible with the first printer.

When a digital receptive module is configured to receive the digital object, the digital object is going to be part of the structure of the digital receptive module, is going to be contained in the digital receptive module or is going to be an element of the digital receptive module.

Nowadays dragging and dropping of digital objects on digital receptive modules is a way of letting the digital receptive module receive the digital object. When the digital object is dragged to a position above the pixel representation of the digital receptive module pixel which is configured to not receive the digital object, the drop action of the digital object pixel representation on the digital receptive module pixel representation will be blocked. Usually a prohibition sign will be displayed on the position of the pixel representation of the digital receptive module.

A problem arises when the pixel display screen comprises pixel representations of multiple digital receptive modules. The user has to drag a digital object from its original position on the pixel display screen a whole way to a position above a pixel representation of a digital receptive module before knowing that the digital receptive module is or is not configured to receive the digital object. This way of working leads to user time penalties in case of multiple digital receptive modules, in case of large screens and when a distance between the digital object and the receptive module on the pixel display screen is relatively large.

It is an objective of the invention to improve the drag-and-drop action of a digital object pixel representation on a digital receptive module pixel representation on the pixel display screen.

According to the present invention, this object is achieved by the method presented here-above, the method comprises the further step of, upon dragging the digital object pixel representation and before the digital object pixel representation overlapping any pixel of the first digital receptive module pixel representation on the pixel display screen, changing at least one of the visual appearance characteristics of the first digital receptive module pixel representation on the pixel display screen causing a visual appearance of the first digital receptive module pixel representation on the pixel display screen that indicates that the first digital receptive module is configured not to receive the digital object.

Upon dragging the digital object pixel representation and before the digital object pixel representation reaching any pixel of the second digital receptive module pixel representation on the pixel display screen, the user notices the visual appearance change of the first digital receptive module pixel representation. Reaching any pixel means that the digital object touches or overlaps a pixel of the digital receptive module pixel representation. Since the user notices the visual appearance change of the first digital receptive module pixel representation at the beginning of the dragging of the digital object pixel representation towards the digital receptive module pixel representation, the user is directly or in an early stage aware of the disability of the digital receptive module to receive the digital object. The user is aware of the disability well ahead of the moment in time that the digital object pixel representation reaches the digital receptive module pixel representation.

The steps of the method may be independent of the memory location for the compatibility properties of the digital object and/or the digital receptive module. The compatibility may be determined by interface components in the software applications steering the digital object representation and the digital receptive module. Every digital receptive module has its own bounded context and has a list of constraints obliged for digital objects to be received. Those constraints may be checked any time against runtime tags and print job settings and parameters.

Examples of visual appearance characteristics will be elucidated hereinafter in the detailed description of the embodiments of the present invention. A visual appearance of the digital receptive module pixel representation is determined by the visual appearance characteristics like a shape, a colour, a move direction, a move speed and an image content of the digital receptive module pixel representation.

According to an embodiment a speed of changing the at least one visual appearance characteristics of the first digital receptive module pixel representation depends on a speed of the dragging. The higher the speed of dragging, the more pronounced the visual appearance is changed in order to attract the immediate attention of the user.

According to an embodiment a level of manifestation of changing the at least one visual appearance characteristics of the first digital receptive module pixel representation depends on the direction of the dragging with respect to a nearest pixel of the first digital receptive module pixel representation. When the direction of dragging is in a direct vector from the position of digital object pixel representation on the pixel display screen to the position of the first digital receptive module pixel representation, the level of manifestation may be large. When the direction of dragging is in an opposite direction from a direct vector from the position of digital object pixel representation on the pixel display screen to the position of the first digital receptive module pixel representation, the level of manifestation may be null.

According to an embodiment the level of manifestation of changing the at least one visual appearance characteristics of the first digital receptive module pixel representation depends on the proximity of the nearest pixel of the first digital receptive module pixel representation to the digital object pixel representation being dragged. When the digital object pixel representation is close to the first digital receptive module pixel representation on the pixel display screen, the level of manifestation of changing is preferably higher in order to timely alert the user when dragging.

According to an embodiment the method comprises the steps of
e) dragging the digital object pixel representation towards a second digital receptive module pixel representation of a second digital receptive module of the plurality of digital receptive modules, which second digital receptive module is configured to receive the digital object, and
f) upon dragging the digital object pixel representation and before the digital object pixel representation reaching any pixel of the second digital receptive module pixel representation on the pixel display screen, changing at least one of the visual appearance characteristics of the second digital receptive module pixel representation on the pixel display screen causing a visual appearance of the second digital receptive module pixel representation on the pixel display screen that indicates that the second digital receptive module is configured to receive the digital object.

According to an embodiment a speed of changing the at least one visual appearance characteristics of the second digital receptive module pixel representation depends on a speed of the dragging.

According to an embodiment a level of manifestation of changing the at least one visual appearance characteristics of the second digital receptive module pixel representation depends on the direction of the dragging with respect to a pixel of the second receptive module pixel representation.

According to an embodiment the level of manifestation of changing the at least one visual appearance characteristics of the second digital receptive module pixel representation depends on the proximity of the nearest pixel of the second receptive module pixel representation to the digital object pixel representation being dragged.

According to an embodiment the digital object is a print job, a digital document or a digital image to be printed and each one of the plurality of digital receptive modules is a print job queue of a printer. The user interface of the electronic system may be a local user interface or a remote user interface connected to or part of a controller of the printer.

The present invention also relates to an electronic system for storing and controlling a digital object and a plurality of digital receptive modules, the electronic system comprising a controller and a display screen for displaying digital pixel representations of the digital object and the plurality of digital receptive modules, wherein the controller is configured to execute a method according to the present invention. The controller may be a controller of a printer.

The present invention also relates to a printing system comprising the electronic system according to the present invention, the electronic system acting as a controller of the printing system in order to execute a method according to the present invention.

The present invention also relates to a software product comprising program code on a non-transitory computer-readable medium, wherein said program code, when loaded into a computer causes the computer to perform a method according to the present invention.

The method and the electronic system will be explained in greater detail with reference to the accompanying drawings wherein:
Fig. 1A - 1B are schematic diagrams showing a configuration of an electronic system according to the present invention,
Fig. 2 shows a printing system according to the present invention,
Fig. 3 shows a pixel display screen of an electronic system according to the present invention,
Fig. 4 - 7 show examples of a virtual beam for application of a manifestation of a visual appearance change according to the present invention,
Fig. 8A - 8G show examples of visual appearance changes of the receptive module according to the present invention, and
Fig. 9 - 10 are flow diagrams of a method according to the present invention.

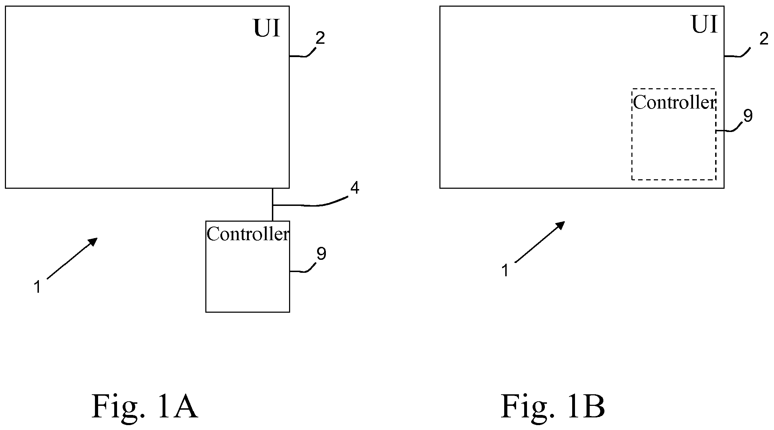

Fig. 1A shows an electronic system 1 comprising a user interface screen 2 connected to a controller 9, e.g. a computer system with processor and memory and user interface touch screen, or an image reproduction system like a printer with a local user interface screen. The controller 9 may be integrated with the user interface screen 2 in a single holding as shown in Fig. 1B. The user interface screen 2 may be a touch screen. The controller 9 may be connected to the user interface screen 2 by a connection 4 which may be wired or wireless as shown in Fig. 1A. The electronic system 1 may be an e-reader, a tablet personal computer, a phone, a smart phone, a laptop, a notebook, a desktop computer, an intelligent white or black board or any other electronic system provided with a user interface screen suitable for pixel representations and user input.

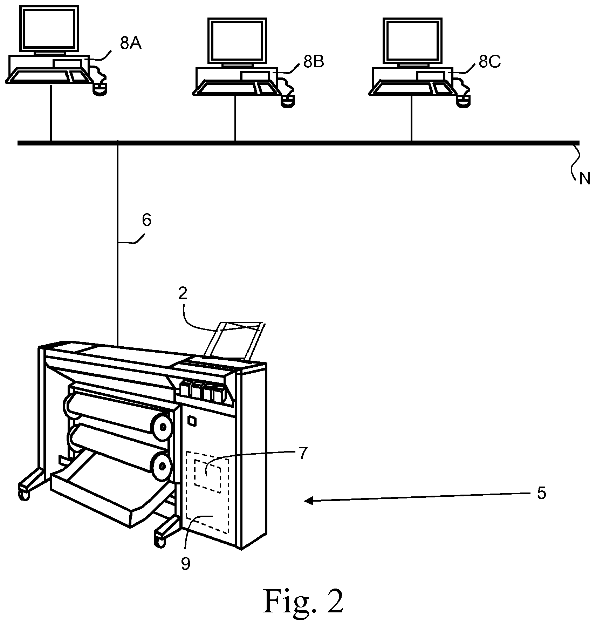

Fig. 2 shows the electronic system integrated in an image reproduction system 5, for example a printer, a copier, a scanner, a multifunctional printer, a small format printer, a wide format printer, an inkjet printer, an electro-photographical printer, a flatbed printer, a metal jet printer, a roll-to-roll printer, a roll-to-cut-sheet printer, a relief printer, a textile printer, a printer for printing a three-dimensional object etc. The invention is particularly suited for use in this kind of environment, where the image reproduction system 5 is available via a network connection 6 for a user working with workstations 8A, 8B, 8C which are connected via a network N. The user may send a print job comprising a set of digital items from the workstation 8A, 8B, 8C to the controller 9 of the image reproduction system 5. The controller 9 comprises a storage 7 for storing print jobs, however storage for storing print jobs, documents or images may also be provided by an external system like a web server, a cloud service or an external server which is connected via a network to the controller 9. The user interface screen 2 acts as a pixel display screen and is suitable for displaying a digital object like a thumb nail, an icon, a text item etc, and is suitable for displaying a digital receptive module like a pane or a window.

The controller 9 may be suited to queue print jobs, to check whether or not the print queue is empty and to submit a document from a queued print job to the print engine of the image reproduction system 5 in order to be printed. The controller 9 may comprise storage 7 for storing digital objects, for example documents of a print job. When a print job arrives at the image reproduction system 5 according to Fig. 2, it is stored in the controller 9.

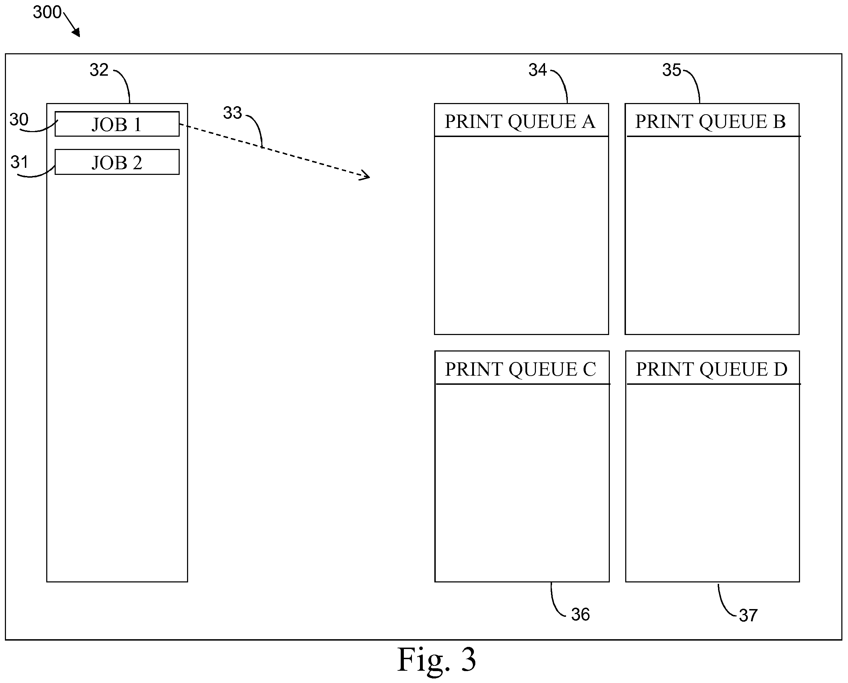

Fig. 3 shows a pixel display screen 300 comprising pixel representations 30, 31 of a digital object and a plurality of digital receptive modules 34, 35, 36, 37. The digital objects are print jobs named JOB 1 and JOB 2. The digital receptive modules are print job queues A, B, C, D. Each print job queue may be dedicated for a type of printer (not shown). Each print job queue may be dedicated for printer locations. The pixel representations 30, 31 of the print jobs JOB 1 and JOB 2 are grouped by a container 32. The container 32 may be a digital waiting room for print jobs intended to be printed and intended to be entered in one of the print job queues A, B, C, D. The print job queues A, B, C, D may be print job queues from at least one printer. If multiple printers are corresponding to the print job queues A, B, C, D, the multiple printers may be mutually incomparable. A mutual incompatibility of the multiple printers may be for example caused by printer specifications with respect to print speed, media capacities, finishing capacities, mono-colour or multi-colour printing capabilities, single-sided or double-sided printing capabilities, etc. An incompatibility of a print job with respect to a print job queue may be that at least one print job specification does not match with at least one printer capability of the printer to which the print job queue corresponds.

A drag action 33 of the digital object 30 in the direction of each of the digital receptive modules 34 - 37 is visualised by a dashed arrow 33. The digital object pixel representation 30 is dragged before the digital object pixel representation 30 overlaps any pixel of the digital receptive module pixel representation 34 on the pixel display screen 300.
For the further description of the embodiments it is assumed that digital receptive modules 35 and 36, i.e. print queue B and C, are configured to receive the digital object 30, i.e. print job JOB 1, while digital receptive modules 34 and 37, i.e. print queue A and D, are configured not to receive the digital object 30, i.e. print job JOB 1. In other words, the digital receptive modules 35 and 36, i.e. print queue B and C, are compatible with the digital object 30, i.e. print job JOB 1, while the digital receptive modules 34 and 37, i.e. print queue A and D, are incompatible with the digital object 30, i.e. print job JOB 1.

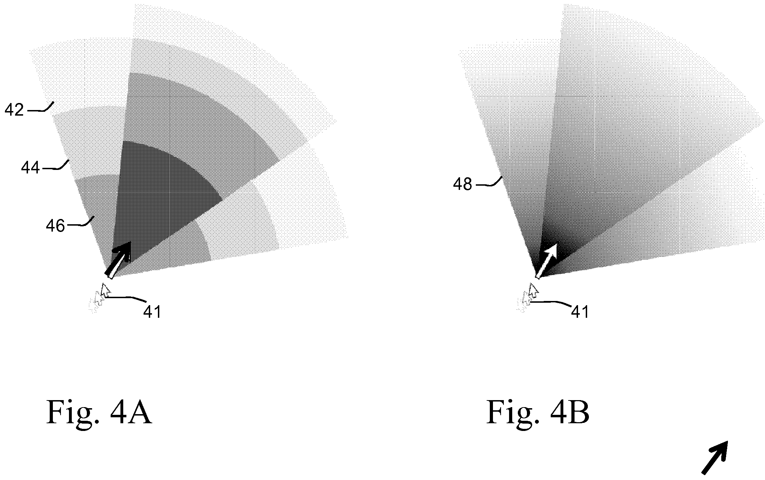

Fig. 4A, 4B, 5, 6, 7 show examples of how to implement a level of manifestation of a change of the visual appearance of a digital receptive module pixel representation when dragging a digital object pixel presentation towards the digital receptive module pixel representation.
A reaction of the digital receptive module pixel representation on the digital object pixel representation dragged to the digital receptive module pixel representation, manifests itself relatively to a strength of the intent of the user to go to the respective digital receptive module pixel representation, as derived from a vector - direction as well as velocity - of a cursor - being actually present at the position of the digital object pixel representation in case of a mouse and being virtually present at the position of the digital object pixel representation in case of a touch - and the proximity of the cursor to the digital receptive module pixel representation.

The level of manifestation is derived from the vector and proximity of the cursor. In Fig. 4A - 4B the cursor 41 throws a virtual beam in front of the cursor 41. The size and shape of the beam determines an amount of manifestation of the digital receptive module pixel representation. In Fig. 4A a virtual beam comprising discrete levels 42, 44, 46 of manifestation is shown, while in Fig. 4B a virtual beam comprising continuous levels 48 of manifestation is shown. The darker the level in Fig. 4A, the closer the digital object is to the digital receptive module and thus the higher the manifestation of the visual appearance change of the digital receptive module pixel representation will be.

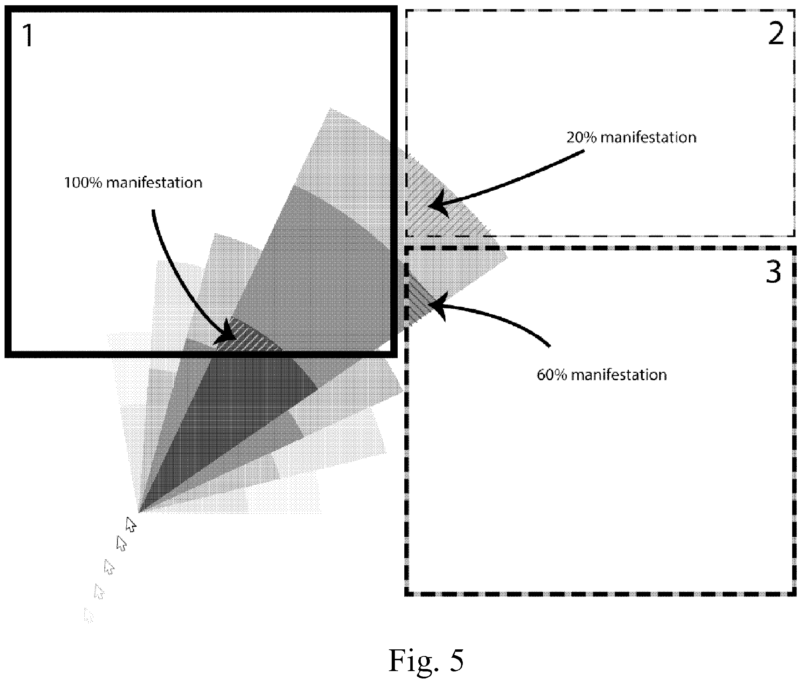

The level of manifestation is determined by the position where the virtual beam and the digital receptive module pixel representation overlap. When multiple levels of the virtual beam or a range of the virtual beam overlap the digital receptive module pixel representation, a highest level is taken into account. For example, in Fig. 5 a first digital receptive module pixel representation numbered 1 manifests a repulsion of the digital object pixel representation stronger (100 %) than a second digital receptive module pixel representation numbered 3 does (60 %), and even more than a third digital receptive module pixel representation numbered 2 does (20 %), based on the level of manifestation that the virtual beam in front of the cursor dictates.

The virtual beam is visualized in the drawings 4A, 4B, 5, 6, 7 for illustration purposes. In a final implementation of the method according to the invention the virtual beam will be not visible for the user.

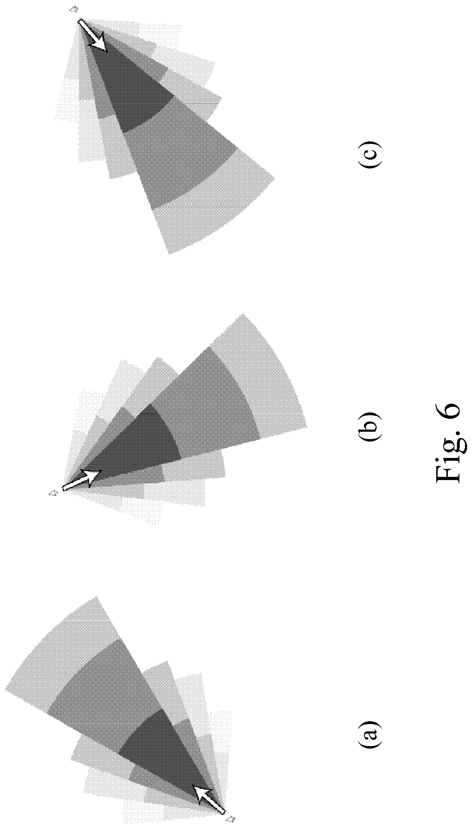

Fig. 6 shows different orientations (a), (b) and (c) of the virtual beam. The orientations (a), (b), (c) are based on the direction in which the cursor is moving, i.e. the direction in which the digital object pixel representation is dragged as shown by the white arrows in Fig. 6.

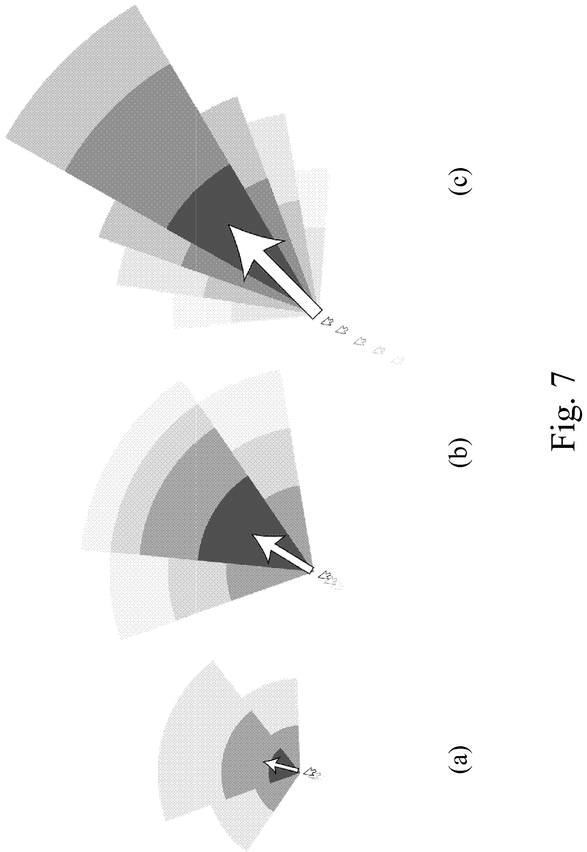

Fig. 7 shows that the virtual beam changes its shape based on the velocity of dragging the digital object pixel representation. Faster dragging means a more focused virtual beam, meaning that the virtual beam has a smaller angle and a longer throw. The virtual beam in Fig. 7(a) has a relative large angle and a relative small throw. The virtual beam in Fig. 7(b) has a relative smaller angle and a relative larger throw than the virtual beam in Fig. 7(a). The virtual beam in Fig. 7(c) has relatively a smallest angle and a largest throw compared to the virtual beams in Fig. 7(a) and 7(b).

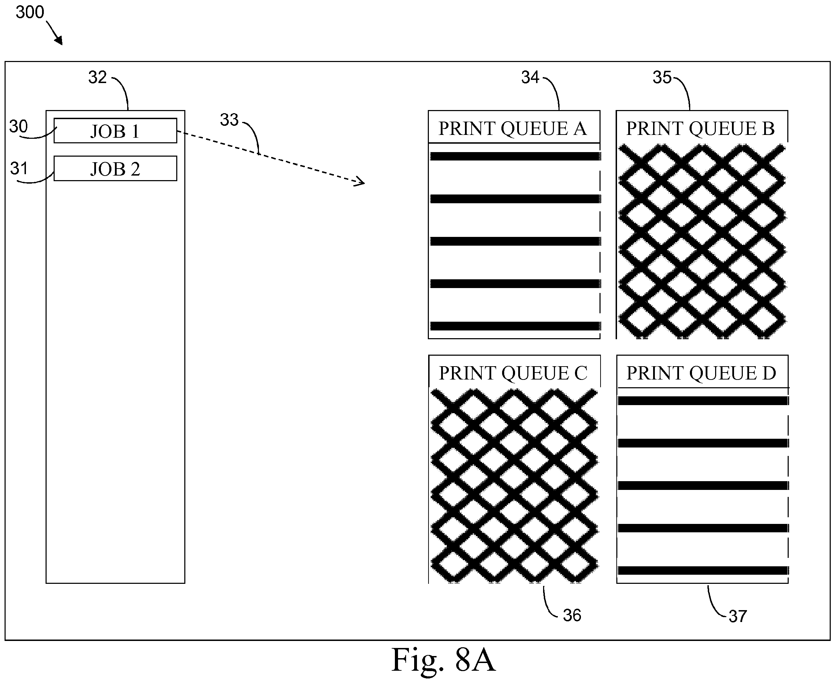

Fig. 8A - 8G show examples of types of changes of at least one of the visual appearance characteristics of the visual appearance of the digital receptive module pixel representation on the display screen 300 as shown in Fig. 3.

Fig. 8A shows digital receptive module pixel representations which manifest by a colour coding. The pixel representations 35, 36 of the digital receptive modules which are configured to receive the digital object 31, are becoming greener when the digital object pixel representation 31 approaches the digital receptive module pixel presentations 35, 36. The pixel representations 34, 37 of the digital receptive modules which are configured not to receive the digital object 31, use another colour, for example red, and they are becoming redder when the digital object pixel representation 31 approaches the digital receptive module pixel representations 34, 37. The colour red is represented in the digital receptive module pixel representations 34, 37 by horizontal bars. The colour green is represented in the digital receptive module pixel representations 35, 36 by crossing bars.

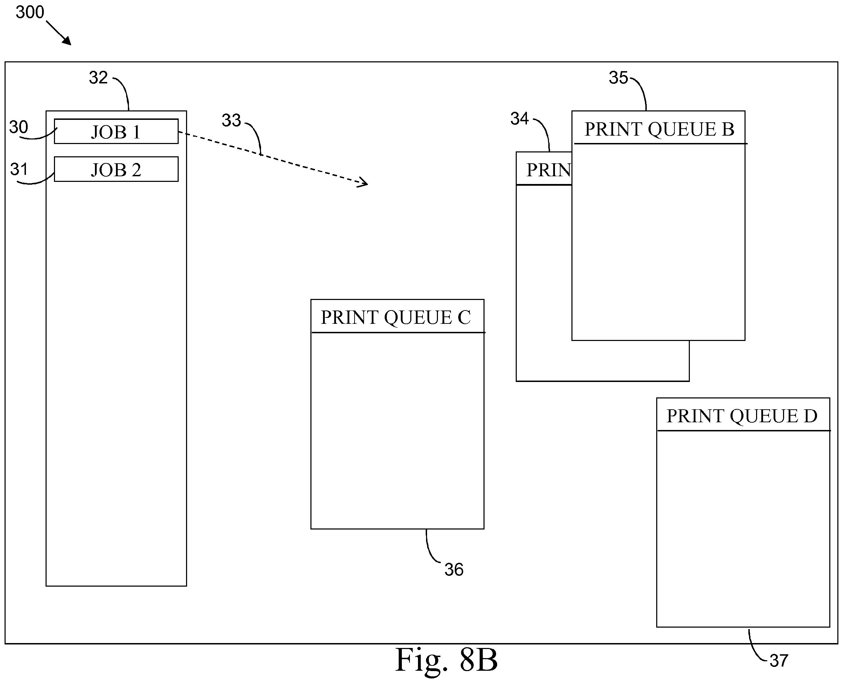

Fig. 8B shows digital receptive module pixel representations which manifest by moving towards the cursor or moving away from the cursor. The pixel representations 35, 36 of the digital receptive modules which are configured to receive the digital object 31, are moving towards the cursor when the digital object pixel representation 31 approaches the digital receptive module pixel presentations 35, 36. The pixel representations 34, 37 of the digital receptive modules which are configured not to receive the digital object 31, are moving away from the cursor when the digital object pixel representation 31 approaches the digital receptive module pixel presentations 34, 37. In the latter case a distance between the digital object pixel representation 31 and the digital receptive module pixel representations 34, 37 is maintained or is even increased. According to an embodiment the movement takes place in a confined area around each of the digital receptive module pixel representations 35 - 37, thereby clipping the digital receptive module pixel representations (not shown).

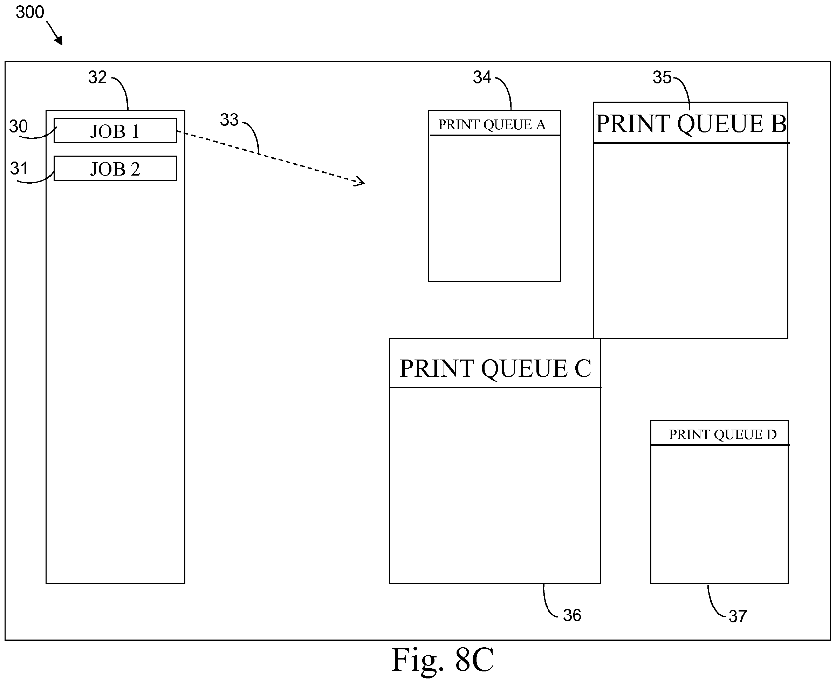

Fig. 8C shows digital receptive module pixel representations which manifest by expanding or shrinking in size. The pixel representations 35, 36 of the digital receptive modules which are configured to receive the digital object 31, are expanding in size when the digital object pixel representation 31 approaches the digital receptive module pixel presentations 35, 36. The pixel representations 34, 37 of the digital receptive modules which are configured not to receive the digital object 31, are shrinking in size when the digital object pixel representation 31 approaches the digital receptive module pixel presentations 34, 37. In the latter case a distance of the digital receptive module pixel representations 34, 37 to an eye of the user is optically increased.

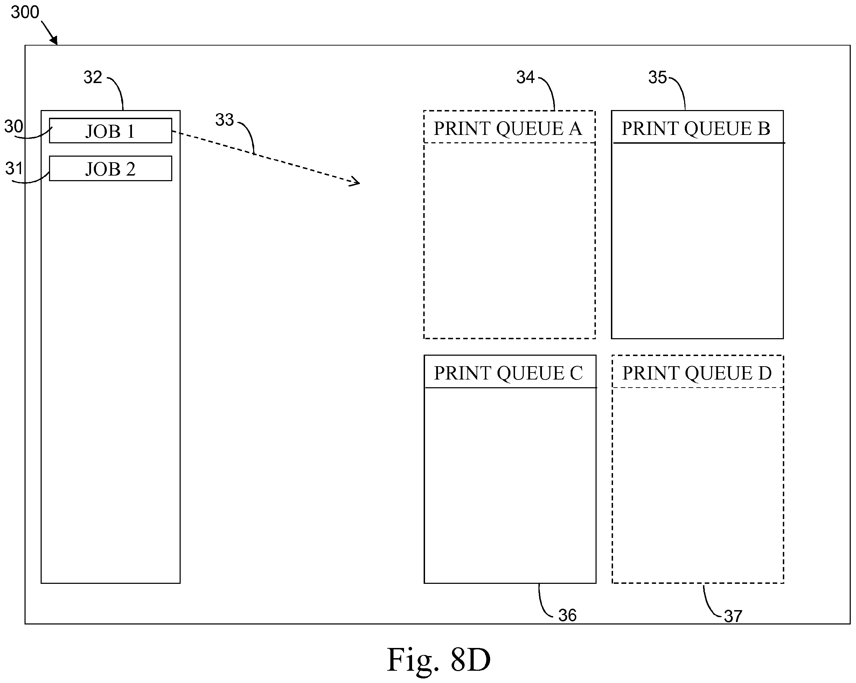

Fig. 8D shows digital receptive module pixel representations which manifest by a degree of transparency. The pixel representations 35, 36 of the digital receptive modules which are configured to receive the digital object 31, remain unchanged, i.e. stay opaque when the digital object pixel representation 31 approaches the digital receptive module pixel presentations 35, 36. The pixel representations 34, 37 of the digital receptive modules which are configured not to receive the digital object 31, are becoming more transparent with respect to a background when the digital object pixel representation 31 approaches the digital receptive module pixel representations 34, 37. In order to show a degree of transparency, the digital receptive module pixel representations 34, 37 are shown by means of having dashed borders.

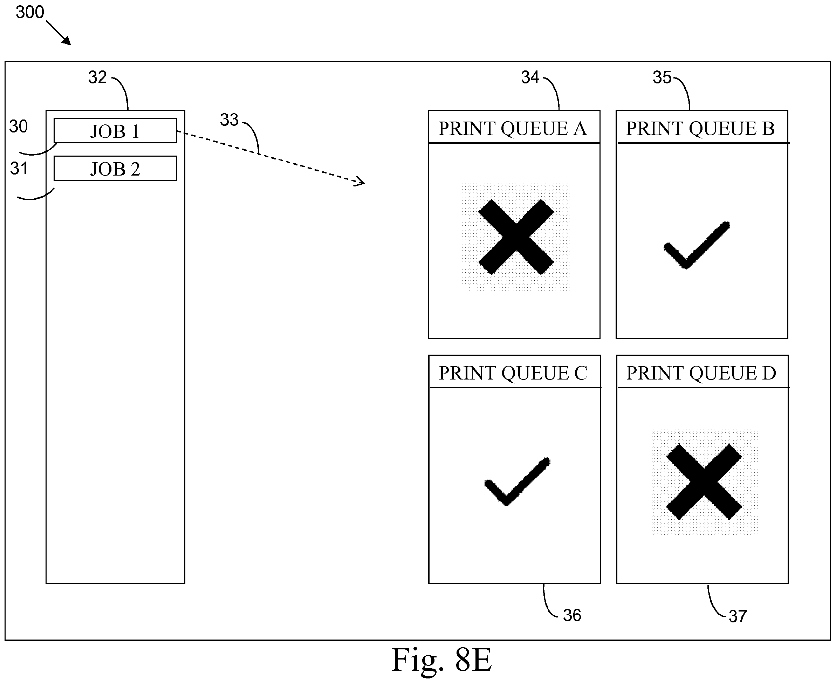

Fig. 8E shows digital receptive module pixel representations which manifest by using symbols or text. The pixel representations 35, 36 of the digital receptive modules which are configured to receive the digital object 31, display an icon or a text label indicative for their nature, for example a checkmark icon, when the digital object pixel representation 31 approaches the digital receptive module pixel presentations 35, 36. The pixel representations 34, 37 of the digital receptive modules which are configured not to receive the digital object 31, display an icon or a text label indicative for their nature, for example a cross mark icon, when the digital object pixel representation 31 approaches the digital receptive module pixel presentations 34, 37.

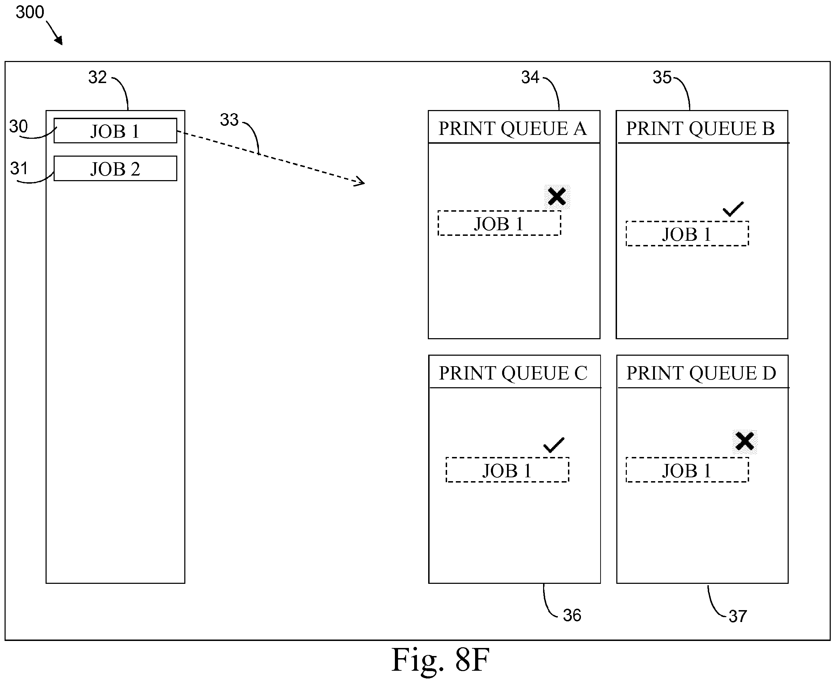

Fig. 8F shows digital receptive module pixel representations which manifest by visual forecasting. On the pixel representations 35, 36 of the digital receptive modules which are configured to receive the digital object 31, a replica or mirror image of the - dragged - digital object pixel representation 31 is projected in the pixel representations 35, 36 when the digital object pixel representation 31 approaches the digital receptive module pixel presentations 35, 36. On the pixel representations 34, 37 of the digital receptive modules which are configured not to receive the digital object 31, nothing is projected or a replica or mirror image is projected with a different visualization, for example a replica or a mirror image with a cross mark icon, when the digital object pixel representation 31 approaches the digital receptive module pixel presentations 34, 37.

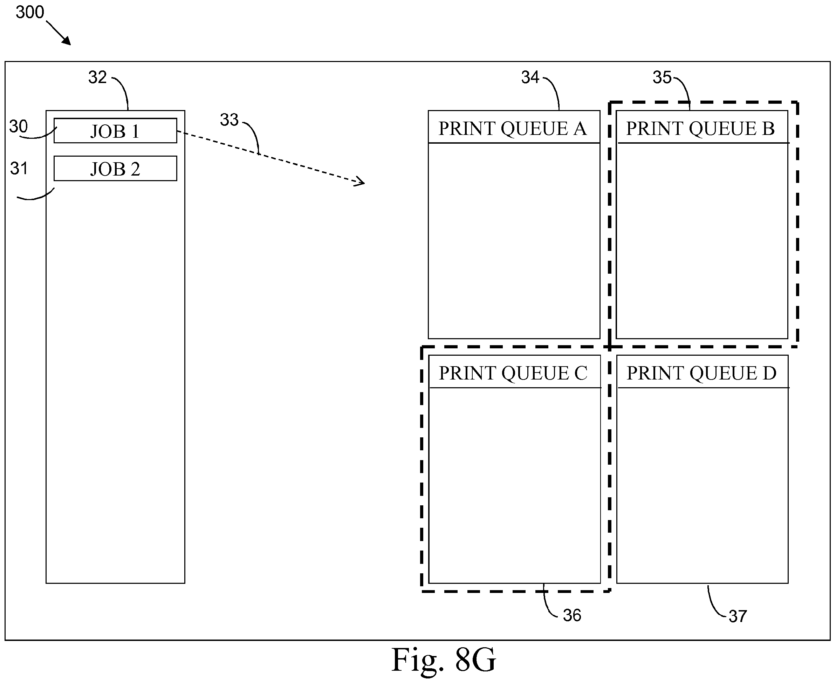

Fig. 8G shows digital receptive module pixel representations which manifest by a showing a border. The pixel representations 35, 36 of the digital receptive modules which are configured to receive the digital object 31, remain unchanged when the digital object pixel representation 31 approaches the digital receptive module pixel presentations 35, 36. A border is drawn more clearly around the pixel representations 34, 37 of the digital receptive modules which are configured not to receive the digital object 31, when the digital object pixel representation 31 approaches the digital receptive module pixel presentations 34, 37.

According to another embodiment digital receptive module pixel representations manifest by exclusion. The pixel representations 35, 36 of the digital receptive modules which are configured to receive the digital object 31, remain unchanged when the digital object pixel representation 31 approaches the digital receptive module pixel presentations 35, 36. A virtual - invisible - border is created around the pixel representations 34, 37 of the digital receptive modules which are configured not to receive the digital object 31, when the digital object pixel representation 31 approaches the digital receptive module pixel presentations 34, 37. The virtual border provides a prohibited passage. The dragged digital object pixel representation 31 will not pass the virtual border in case of the incompatible digital receptive module pixel representations 34, 37. A fingertip or cursor may pass the virtual border, but the dragged digital object pixel representation 31 will stick to the virtual border and is unable to pass the virtual border.

The examples of types of changes of at least one of the visual appearance characteristics of the visual appearance of the digital receptive module pixel representation on the display screen as shown in Fig. 8A - 8G may be combined and are part of the scope of the invention.

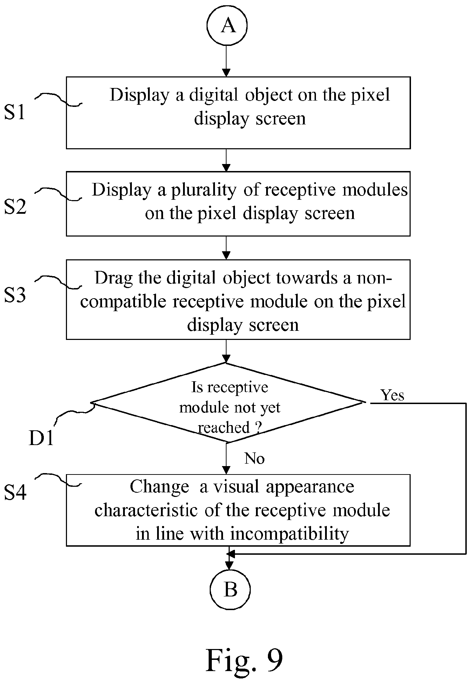

Fig. 9 shows a flow diagram of the method according to the invention.
The computer-implemented method is suitable for dragging and dropping the digital object on a pixel display screen of the electronic system for storing and controlling the digital object and the plurality of digital receptive modules. Each digital receptive module is configured to receive or not to receive the digital object, i.e. each digital receptive module is compatible or incompatible with the digital object.

The method starts in a starting point A. The starting point A leads to a first step S1.
In the first step S1 a digital object pixel representation of the digital object is displayed on the display screen. The digital object pixel representation may be a number of pixels forming an image, an icon, a text, etc.
In a second step S2 a digital receptive module pixel representation is displayed for each one of the plurality of digital receptive modules on the display screen.

In a third step S3 the digital object pixel representation is dragged towards a first digital receptive module pixel representation of a first digital receptive module of the plurality of digital receptive modules. The first digital receptive module is configured not to receive the digital object. The dragging may a result of a user action on the display screen by moving a cursor by means of a mouse or by a touch dragging action in case of a touch screen. The digital object pixel representation is dragged in the direction of the first digital receptive module pixel representation.

In a fourth step S4, upon dragging the digital object pixel representation towards the receptive module and before the digital object pixel representation reaches, touches or overlaps with any pixel of the first digital receptive module pixel representation on the pixel display screen, at least one of the visual appearance characteristics of the first digital receptive module pixel representation on the pixel display screen is changed. This change causes a visual appearance of the first digital receptive module pixel representation on the pixel display screen that indicates that the first digital receptive module is configured not to receive the digital object. A check if the digital object has not yet reached the receptive module, is executed in a decision step D1 by the controller of the electronic system. The controller registers at any time the position coordinates of the digital object and the receptive module on the display screen. If the check in the decision step D1 is positive, the method proceeds to an end point B. If the check in the decision step D1 is negative, the method proceeds with the fourth step S4.

Examples of such a visual appearance change have been elucidated in Fig. 8A - 8G. As long as the distance between the digital object and the receptive module is larger than zero, the visual appearance change is visible. In this way the user who starts dragging the digital object is immediately after the start of the drag aware of that the digital receptive module is not compatible with the digital object. The user may stop dragging the digital object to the digital receptive module immediately - and by doing so, he will not lose any time in useless dragging. The user may then select another digital receptive module from the plurality of digital receptive modules on the display screen for a next dragging action.

The change of the visual appearance characteristics may take place for each receptive module laying in the direction of the dragging, i.e. laying in the virtual beam as described here-above. For example, the change takes place simultaneously for both print job queues A and D shown in Fig. 3.

All foregoing described embodiments are suitable to be combined with or to be incorporated in the steps S1 - S4, D1 of the flow diagram of Fig. 9.

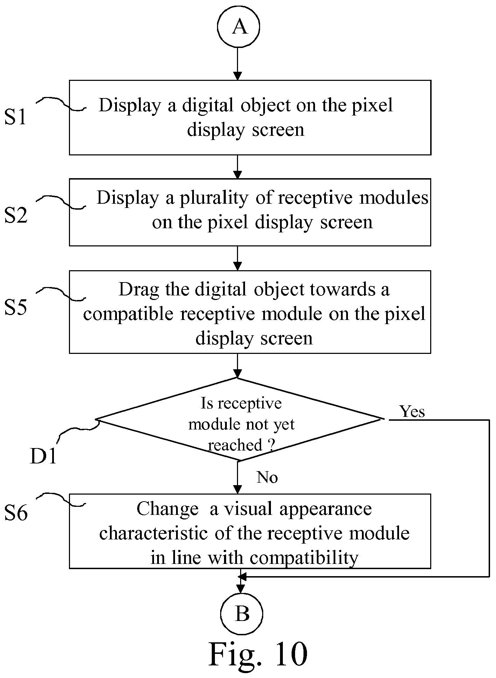

A further embodiment of the method is shown in Fig. 10. The method comprises besides the first step S1, the second step S2 and the decision step D1, the next additional steps. In a fifth step S5 the digital object pixel representation is dragged towards a second digital receptive module pixel representation of a second digital receptive module of the plurality of digital receptive modules. In contrary to the first digital receptive module, the second digital receptive module is configured to receive the digital object.
In a sixth step S6, upon dragging the digital object pixel representation and before the digital object pixel representation reaches or touches or overlaps with any pixel of the second digital receptive module pixel representation on the pixel display screen, at least one of the visual appearance characteristics of the second digital receptive module pixel representation on the pixel display screen is changed such that the visual appearance of the second digital receptive module pixel representation on the pixel display screen indicates that the second digital receptive module is configured to receive the digital object.

The methods in Fig. 9 and 10 are combinable in the sense that when dragging the digital object to a digital receptive module on the display screen, the controller of the electronic system determines the compatibility of the digital receptive module with the digital object and then the appropriate visual appearance changes of the receptive module are displayed on the pixel display screen by applying either the fourth step S4 in case of a determined incompatibility or the sixth step S6 in case of a determined compatibility. For example, a visual appearance change for print queues A and D shown in Fig. 3 takes simultaneously place with a - different - visual appearance change for print queue B and C shown in Fig. 3 during dragging the digital object 31.

Therefore the third step S3 in Fig. 9 and the fifth step S5 in Fig. 10 may describe a same single dragging action of the digital object when the incompatible receptive module mentioned in the third step S3 and the compatible receptive module mentioned in the fifth step S5 are both visible on the pixel display screen and are positioned in the same direction of the dragging, i.e. both receptive modules are positioned in the virtual beam of the cursor or dragging touch accompanying the digital object.

It may be clear to the skilled person that the various embodiments of the method may be combined in one way or another in order to establish an appropriate and applicable embodiment of the method according to the invention.

## Claims

1. A computer-implemented method for dragging and dropping a digital object on a pixel display screen of an electronic system for storing and controlling the digital object and a plurality of digital receptive modules, each digital receptive module being configured to receive or not to receive the digital object, the method comprising the steps of
a) displaying a digital object pixel representation of the digital object on the display screen,
b) displaying a digital receptive module pixel representation for each one of the plurality of digital receptive modules on the display screen,
c) dragging the digital object pixel representation towards a first digital receptive module pixel representation of a first digital receptive module of the plurality of digital receptive modules, which first digital receptive module is configured not to receive the digital object, and
d) upon dragging the digital object pixel representation and before the digital object pixel representation reaches any pixel of the first digital receptive module pixel representation on the pixel display screen, changing at least one of the visual appearance characteristics of the first digital receptive module pixel representation on the pixel display screen causing a visual appearance of the first digital receptive module pixel representation on the pixel display screen that indicates that the first digital receptive module is configured not to receive the digital object.

2. A method according to claim 1, wherein a speed of changing the at least one visual appearance characteristics of the first digital receptive module pixel representation depends on a speed of the dragging.

3. A method according to any of the preceding claims, wherein a level of manifestation of changing the at least one visual appearance characteristics of the first digital receptive module pixel representation depends on the direction of the dragging with respect to a nearest pixel of the first digital receptive module pixel representation.

4. A method according to claim 3, wherein the level of manifestation of changing the at least one visual appearance characteristics of the first digital receptive module pixel representation depends on the proximity of the nearest pixel of the first digital receptive module pixel representation to the digital object pixel representation being dragged.

5. A method according to any of the preceding claims, wherein the method comprises the steps of
e) dragging the digital object pixel representation towards a second digital receptive module pixel representation of a second digital receptive module of the plurality of digital receptive modules, which second digital receptive module is configured to receive the digital object, and
f) upon dragging the digital object pixel representation and before that the digital object pixel representation reaches any pixel of the second digital receptive module pixel representation on the pixel display screen, changing at least one of the visual appearance characteristics of the second digital receptive module pixel representation on the pixel display screen causing a visual appearance of the second digital receptive module pixel representation on the pixel display screen that indicates that the second digital receptive module is configured to receive the digital object.

6. A method according to claim 5, wherein a speed of changing the at least one visual appearance characteristics of the second digital receptive module pixel representation depends on a speed of the dragging.

7. A method according to any of the claims 5 - 6, wherein a level of manifestation of changing the at least one visual appearance characteristics of the second digital receptive module pixel representation depends on the direction of the dragging with respect to a nearest pixel of the second receptive module pixel representation.

8. A method according to claim 7, wherein the level of manifestation of changing the at least one visual appearance characteristics of the second digital receptive module pixel representation depends on the proximity of the nearest pixel of the second receptive module pixel representation to the digital object pixel representation being dragged.

9. A method according to any of the preceding claims, wherein the digital object is a print job, a digital document or a digital image to be printed and each one of the plurality of digital receptive modules is a print job queue of a printer.

10. An electronic system for storing and controlling a digital object and a plurality of digital receptive modules, the electronic system comprising a controller and a display screen for displaying digital pixel representations of the digital object and the plurality of digital receptive modules, wherein the controller is configured to execute a method according to any of the claims 1 - 9.

11. A printing system comprising the electronic system according to claim 10, the electronic system acting as a controller of the printing system in order to execute a method according to claim 9.

12. A software product comprising program code on a non-transitory computer-readable medium, wherein said program code, when loaded into a computer causes the computer to perform a method according to any of the claims 1 - 9.
